# FASCICULE DE BREVET EUROPEEN

(11) **EP 2 740 031 B1**
(45) Date de publication et mention de la délivrance du brevet: **01.05.2019**
(21) Numéro de dépôt: 12735890.1
(22) Date de dépôt: 18.07.2012
(51) Int. Cl.: G06F 8/65, H04N 21/239, H04N 21/24, H04N 21/25, H04N 21/258, H04N 21/262, H04N 21/4405, H04N 21/442, H04N 21/466, H04N 21/6547, H04N 21/658, H04N 21/8355, H04L 12/24, H04L 29/08, G06F 9/48

(54) **PROCEDE DE LISSAGE DE LA CHARGE DE TRAVAIL D'UN SERVEUR**
VERFAHREN ZUM GLÄTTEN DER ARBEITSBELASTUNG EINES SERVERS
METHOD OF SMOOTHING THE WORKLOAD OF A SERVER

(30) Priorité: 02.08.2011 FR 1157101
(43) Date de publication de la demande: 11.06.2014
(73) Titulaire: Viaccess, 92057 Paris La Défense (FR)
(72) Inventeur: BOIVIN, Mathieu, F-95490 Vaureal (FR)
(74) Mandataire: GIE Innovation Competence Group
(86) Numéro de dépôt international: PCT/EP2012/064099
(87) Numéro de publication internationale: WO 2013/017411

(56) Documents cités:
- EP-A1- 1 566 736
- US-A1- 2008 154 805

## Description

L'invention concerne un procédé de lissage de la charge de travail d'un serveur de transaction exécutant des traitements en réponse à des requêtes transmises par des terminaux distants et distincts les uns des autres. L'invention concerne également un procédé de fonctionnement d'un terminal et d'un serveur pour la mise en oeuvre de ce procédé de lissage. Enfin, l'invention concerne aussi un terminal, un serveur et un support d'enregistrement d'informations pour la mise en oeuvre de ce procédé de lissage.

Par « charge de travail » on désigne une grandeur physique mesurable qui permet de calculer le taux d'occupation d'une ressource informatique exploitée par le serveur de transaction pour exécuter le traitement requis par le terminal. Chaque ressource informatique possède un seuil de charge au-delà duquel elle ne peut plus être utilisée pour réaliser un traitement supplémentaire. Lorsque ce seuil de charge est dépassé, on dit que la ressource ou le système qui incorpore cette ressource est « surchargé ». Le taux d'occupation est typiquement le rapport entre le nombre de traitements déjà en cours et ce seuil de charge. Par exemple, typiquement, la grandeur physique mesurable est le nombre de connexions simultanées actuellement établies avec le serveur. Cette grandeur physique mesurable peut également être le nombre d'opérations exécutées par seconde par un microprocesseur électronique du serveur pour traiter les requêtes des terminaux.

Lisser la charge de travail du serveur de transaction consiste d'abord à éviter que l'on dépasse par instants son seuil de charge. Typiquement, lorsque le seuil de charge est atteint, soit le serveur de transaction refuse toute nouvelle connexion soit le serveur établit la nouvelle connexion mais n'exécute pas le traitement requis par le terminal car la ou les ressources nécessaires sont surchargées. Dans ces deux cas, on considère qu'il y a « échec » de la connexion puisque celle-ci n'a pas conduit à l'exécution immédiate du traitement requis par le terminal.

De préférence, le lissage de la charge de travail consiste aussi à répartir le plus uniformément possible dans le temps les traitements exécutés par le serveur de transaction et, si possible, à maintenir la charge de travail constamment au-dessus d'un seuil prédéterminé.

Pour lisser la charge de travail du serveur de transaction, des procédés connus comportent :
- le calcul d'une date de rendez-vous à laquelle le terminal doit établir une connexion avec le serveur de transaction pour lui transmettre ladite requête,
- le déclenchement de l'établissement par ce terminal de cette connexion en fonction de la date de rendez-vous calculée de manière à ce que l'établissement de cette connexion se produise uniquement au moment ou après que cette date de rendez-vous soit arrivée,
- la construction d'un plan de charge du serveur de transaction en fonction des dates de rendez-vous calculées, ce plan de charge associant à chaque date possible une charge prévisionnelle de travail de ce serveur de transaction à cette date.

Par « date » on désigne toute information qui permet d'indiquer un instant déterminé par rapport à une origine des temps. Une date peut se présenter sous différents formats. Par exemple, l'un des formats classiques est le format année/mois/jour/heure/minute/seconde. La date peut également s'écrire sous la forme d'une valeur numérique ou d'un nombre d'intervalles de temps prédéterminés successifs écoulés depuis l'origine des temps. L'origine des temps est généralement absolue et commune à tous les terminaux et serveurs. Toutefois, l'origine des temps peut également être fixée par rapport à un évènement particulier tel que la réception d'un message de convocation. Par exemple, dans la suite de cette description, la date est un instant mesuré en secondes écoulées depuis une origine des temps commune à l'ensemble des équipements. Les horloges utilisées par les différents équipements pour mesurer la date sont synchronisées entre elles de façon conventionnelle.

Par la suite, on appelle « date courante », la date correspondant à l'instant présent.

Dans les procédés connus, il a déjà été envisagé dans la demande de brevet JP 2007 005971 de fixer la date de rendez-vous en fonction du plan de charge du serveur de transaction pour limiter les échecs de connexion à la date de rendez-vous. Grâce à cela, la charge de travail du serveur de transaction est lissée de façon efficace puisque, a priori, le terminal se connecte au serveur de transaction uniquement à une date où ce dernier a la capacité d'exécuter le traitement requis. Ceci permet de limiter les surcharges du serveur de transaction. Toutefois, il est souhaitable d'améliorer ce procédé pour lisser de manière encore plus efficace la charge de travail du serveur de transaction.

De l'état de la technique est également connu de :
- EP1 566 736 A1, et
- US2008/154805.

L'invention a donc pour objet un procédé de lissage de la charge de travail conforme à la revendication 1.

Dans le procédé ci-dessus, on maximise les chances de réussite du traitement de la requête du terminal lors de sa connexion à la date de rendez-vous calculée. En effet, la date de rendez-vous est calculée pour tomber à la fois :
- à un instant où la charge de travail du serveur de transaction est suffisamment faible pour exécuter immédiatement le traitement requis par le terminal, et
- à un instant où le terminal est dans l'état actif et peut donc se connecter au serveur de transaction.

Ce procédé permet donc de limiter le nombre d'échec de connexion et, par conséquent, de lisser encore plus efficacement la charge de travail du serveur.

De plus, ce procédé est entièrement automatisable de sorte que l'intervention d'un utilisateur devient inutile.

Les modes de réalisation de ce procédé peuvent comporter une ou plusieurs des caractéristiques des revendications dépendantes de procédé de lissage.

Ces modes de réalisation présentent en outre les avantages suivants :
- la sélection de la date de rendez-vous en fonction du profil commun d'utilisation permet d'optimiser la charge de travail du serveur pendant les périodes creuses;
- sélectionner automatiquement la date de rendez-vous la plus proche de la date courante permet d'exécuter le plus rapidement possible tous les traitements sans dépasser le seuil de charge du serveur de transaction ;
- authentifier le terminal lors de la première connexion permet de rendre plus difficile une attaque contre le serveur consistant à lui faire exécuter de façon inutile le calcul d'un grand nombre de dates de rendez-vous puisque seul un terminal correctement authentifié peut déclencher ce calcul ;
- la génération et l'utilisation d'un certificat électronique temporaire permet de rendre plus difficile toute tentative d'attaque visant à surcharger le serveur en lui faisant exécuter un grand nombre de traitements inutiles puisque seul le terminal ayant un certificat électronique temporaire authentique peut déclencher l'exécution d'un traitement par le serveur ;
- la non-exécution systématique du traitement lorsque le certificat électronique temporaire reçu a expiré oblige le terminal à demander une nouvelle date de rendez-vous si celui-ci s'est connecté au serveur après la date de validité du certificat électronique temporaire, ce qui permet de mieux lisser la charge de travail du serveur de transaction.

L'invention a également pour objet un procédé de fonctionnement d'un serveur, pour la mise en oeuvre du procédé de lissage ci-dessus, conforme à la revendication 8.

L'invention a également pour objet un procédé de fonctionnement d'un terminal, pour la mise en oeuvre du procédé de lissage ci-dessus, conforme à la revendication 9.

L'invention a également pour objet un support d'enregistrement d'informations comportant des instructions pour l'exécution de l'un quelconque des procédés ci-dessus, lorsque ces instructions sont exécutées par un calculateur électronique.

L'invention a également pour objet un terminal conforme à la revendication 13.

Les modes de réalisation de ce terminal peuvent comporter la caractéristique de la revendication 15.

L'invention sera mieux comprise à la lecture de la description qui va suivre, donnée uniquement à titre d'exemple non limitatif et faite en se référant aux dessins sur lesquels :
- la figure 1 est une illustration schématique d'un système d'émission et de réception de contenus multimédias embrouillés ;
- la figure 2 est une illustration schématique d'un profil individuel d'utilisation ;
- les figures 3 et 4 sont des chronogrammes représentant des exemples respectifs de profil individuel d'utilisation mis en oeuvre dans le système de la figure 1 ;
- la figure 5 est une illustration schématique d'un relevé d'instants de basculement mis en oeuvre dans le système de la figure 1 ;
- la figure 6 est un chronogramme illustrant une partie du contenu du relevé de la figure 5;
- la figure 7 est une illustration schématique et partielle d'un message de convocation mis en oeuvre dans le procédé de la figure 1 ;
- les figures 8 et 9 sont des illustrations schématiques et partielles de tables mises en oeuvre dans le procédé de la figure 1 ;
- la figure 10 est un organigramme d'un procédé de lissage de la charge de travail d'un serveur de transaction mis en oeuvre dans le système de la figure 1 ;
- les figures 11 et 12 sont des illustrations schématiques de relevés d'instants de basculement utilisés par le procédé de la figure 10.

Dans ces figures, les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias embrouillés. Pour plus d'informations sur cette terminologie, le lecteur peut se reporter aux documents suivants :
« Functional Model of a Conditional Access System », EBU Review, Technical European Broadcasting Union, Bruxels, BE, N° 266, le 21 décembre 1995.

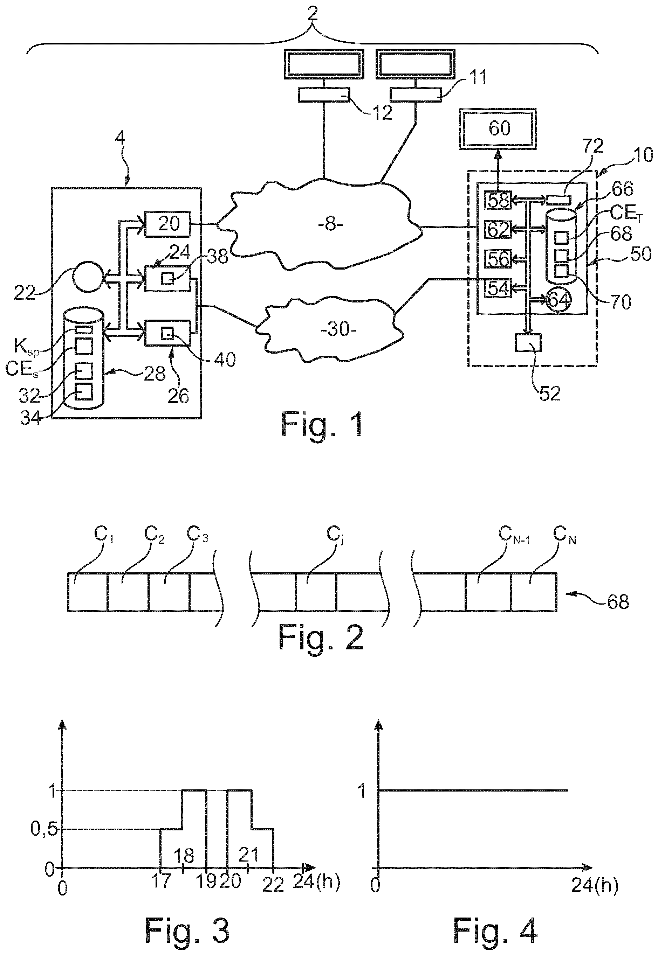

La figure 1 représente un système 2 d'émission et de réception de contenus multimédias embrouillés. Le système 2 comprend une tête de réseau 4 diffusant par l'intermédiaire d'un réseau 8 de transmission d'informations, les contenus multimédias embrouillés à destination d'une multitude de terminaux. Pour simplifier la figure 1, seuls trois terminaux 10 à 12 sont représentés.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

La tête de réseau 4 comprend notamment un dispositif 20 de diffusion de contenus multimédias embrouillés. Par exemple, ce dispositif 20 est identique ou similaire au dispositif 6 décrit dans la demande de brevet FR 2954875 déposée par Viaccess sans qu'il soit nécessaire d'implémenter les mécanismes pour obtenir les mots de contrôle à l'avance. Ce dispositif 20 ne sera donc pas décrit plus en détail ici.

La tête de réseau 4 comprend également :
- une horloge interne 22 apte à donner la date courante,
- un serveur 24 de rendez-vous,
- un serveur 26 de transaction, et
- une mémoire non volatile 28.

Le serveur 26 est apte à exécuter un traitement en réponse à une requête d'un des terminaux du système 2. Ici, le serveur 26 est décrit dans le cas particulier où le traitement requis par le terminal est le téléchargement d'une mise à jour logicielle de ce terminal.

Le serveur 24 permet d'établir une date de rendez-vous à laquelle chaque terminal doit se connecter au serveur 26 pour télécharger la mise à jour logicielle lui correspondant.

Les serveurs 24 et 26 sont raccordés à chacun des terminaux par l'intermédiaire d'un réseau 30 bidirectionnel de transmission d'informations. Ce réseau 30 permet d'établir des connexions point à point entre le serveur 24 ou 26 et un terminal quelconque du système 2. Ici, pour simplifier la figure 1, seule la liaison entre le réseau 30 et le terminal 10 est représentée.

La mémoire 28 contient :
- une clé privée Kₛₚ correspondant à une clé publique Kₛₚᵤ,
- un certificat électronique CEₛ,
- un plan de charge 32 et un profil commun 34 d'utilisation.

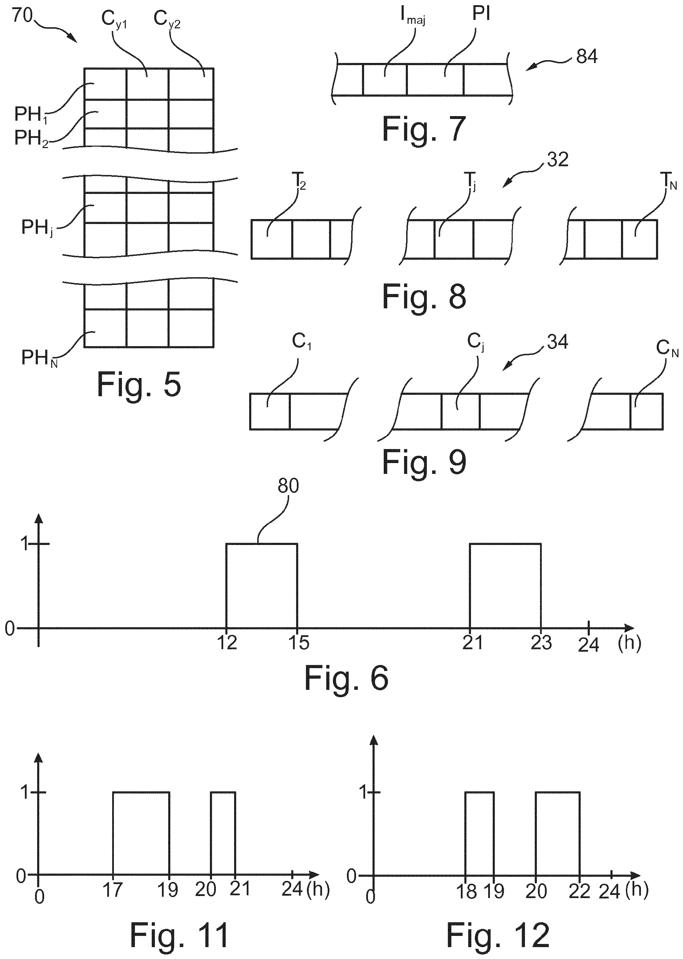

Le plan 32 et le profil 34 sont décrits plus en détail en référence, respectivement, aux figures 8 et 9.

Le certificat électronique CEₛ comprend une signature numérique obtenue, par exemple, en chiffrant des informations contenues dans ce certificat avec la clé privée Kₛₚ. La clé Kₛₚ est connue par la tête de réseau 4 mais n'est pas connue par les terminaux du système 2. Ce certificat électronique est vérifié à l'aide de la clé publique Kₛₚᵤ. Ici ce certificat contient notamment un identifiant du serveur 26 de transaction.

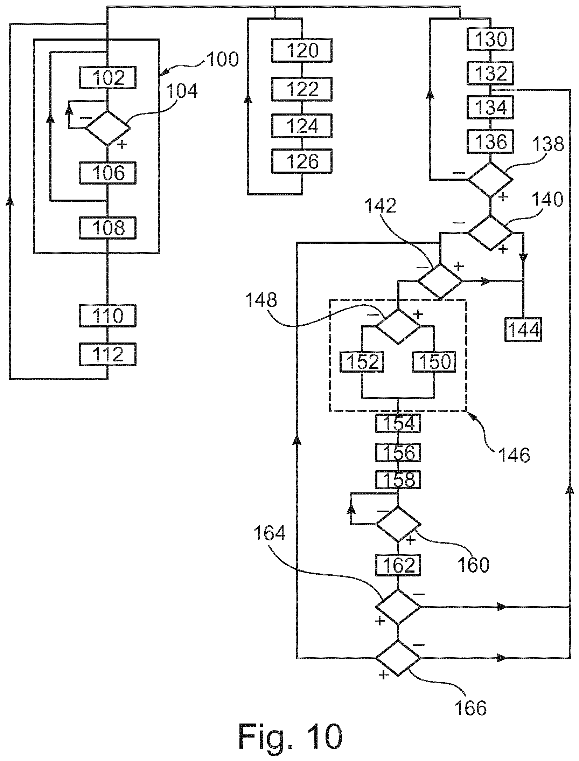

Les serveurs 24 et 26 sont réalisés à partir de calculateurs électroniques programmables aptes à exécuter des instructions enregistrées sur un support d'enregistrement d'informations. Ici, les serveurs 24 et 26 comportent, respectivement, des calculateurs électroniques 38 et 40 aptes à exécuter des instructions enregistrées dans la mémoire 28. A cet effet, la mémoire 28 comporte également des instructions pour l'exécution du procédé de la figure 10.

Dans ce mode de réalisation, tous les terminaux sont supposés identiques. Ainsi, seul le terminal 10 est décrit plus en détail.

Le terminal 10 désembrouille les contenus multimédias transmis par la tête de réseau 4 et les affiche en clair sur l'écran 60. Par « en clair », on désigne le fait que le contenu multimédia ainsi affiché est directement perceptible et compréhensible par un être humain. Le terminal 10 comprend un décodeur 50 raccordé à un processeur 52 de sécurité. Le décodeur 50 démultiplexe et désembrouille les contenus multimédias reçus. Le processeur 52 déchiffre les cryptogrammes des mots de contrôle contenus dans des messages ECM (Entitlement Control Message) qui lui sont transmis par le décodeur 50. Le processeur 52 est par exemple une carte à puce. Un tel processeur est décrit dans la demande de brevet publiée sous le numéro FR 2954875. Il n'est donc pas décrit plus en détail. Ici, le processeur 52 est un processeur amovible apte à être retiré et, en alternance, introduit à l'intérieur du décodeur 50 de façon réversible par l'utilisateur.

Le décodeur 50 comporte notamment :
- une carte réseau 54 pour établir la connexion point à point avec les serveurs 24 et 26 par l'intermédiaire du réseau 30,
- un désembrouilleur 56 apte à désembrouiller le contenu multimédia reçu par l'intermédiaire du réseau 8 à l'aide du mot de contrôle délivré par le processeur 52,
- une carte graphique 58 apte à afficher en clair sur un écran 60 le contenu multimédia désembrouillé,
- un calculateur électronique programmable 62 apte à exécuter des instructions sur un support d'enregistrement d'informations,
- une horloge interne 64 qui délivre la date courante, et
- une mémoire non volatile 66.

La mémoire 66 contient les instructions exécutables par le calculateur 62 pour la mise en oeuvre du procédé de la figure 10. De plus, cette mémoire contient :
- un certificat électronique CE_{T} du terminal,
- un profil individuel 68 d'utilisation, et
- un relevé 70 d'instants de basculement.

Le profil 68 et le relevé 70 sont décrits plus en détail en référence aux figures 2 et 5.

Le certificat CE_{T} comporte notamment :
- un identifiant du terminal 10 permettant d'identifier ce terminal parmi l'ensemble des terminaux du système 2, et
- une signature numérique.

La signature numérique est obtenue à partir de l'identifiant du terminal ainsi qu'à partir d'une clé privée K_{Tp} connue de ce terminal mais inconnue des autres terminaux du système.

Le décodeur 50 comprend également une interface homme machine 72 permettant de faire basculer le terminal 10 entre un état actif et un état inactif. Dans l'état actif, le terminal 10 peut prendre automatiquement l'initiative de se connecter au serveur 24 ou 26 pour lancer l'exécution d'un traitement par le serveur 26. Dans l'état inactif, le terminal 10 est incapable d'établir une connexion avec le serveur 24 ou 26. Typiquement, l'état actif correspond à l'état allumé du terminal tandis que l'état inactif correspond à l'état éteint ou en veille du terminal 10.

L'interface 72 est par exemple un bouton ou un récepteur infrarouge associé à une télécommande directement manipulable par l'utilisateur.

Un profil individuel d'utilisation tel que le profil 68 est une fonction associant à chaque date une probabilité d'état Pᵢ, où l'indice i est un identifiant du terminal. La probabilité d'état Pᵢ correspond à la probabilité que ce terminal soit dans l'état actif à cette date à venir. Ici la probabilité d'état Pᵢ prend une valeur comprise entre 0 et 1. Plus la valeur de la probabilité Pᵢ est faible, plus la probabilité que le terminal soit dans l'état actif est faible. Ici, le profil 68 est implémenté sous la forme d'une table dont un exemplaire est représenté dans la figure 2. Dans cette figure et dans les figures suivantes, les traits ondulés indiquent que des parties de la représentation ont été omises.

Le profil 68 associe à chaque plage horaire à venir une valeur spécifique de la probabilité Pᵢ. Ici, les plages horaires sont immédiatement consécutives dans le temps. La durée d'une plage horaire est typiquement comprise entre une minute et vingt-quatre heures et, de préférence, entre une minute et quatre heures ou entre une minute et une heure. Dans ce mode de réalisation, la durée de chaque plage horaire est identique. Ici, la durée de chaque plage horaire est égale à quinze minutes.

Chaque plage horaire est associée à un identifiant permettant d'identifier sa position dans le temps par rapport aux autres plages horaires.

A cet effet, dans ce mode de réalisation, le profil 68 comporte une succession ordonnée de cellules Cⱼ dans laquelle la position de la cellule par rapport aux autres cellules identifie la plage horaire concernée, où l'indice j est un identifiant de la cellule et donc de la plage horaire. Chaque cellule comprend une valeur pᵢⱼ spécifique de la probabilité Pᵢ pour cette plage horaire.

L'ensemble des plages horaires définit un cycle d'utilisation du terminal. En effet, on suppose ici que l'état du terminal évolue de façon cyclique, c'est-à-dire que l'utilisation du terminal peut être divisée en cycles successifs. Pendant chaque cycle l'état du terminal évolue au cours du temps de façon similaire à l'évolution observée pendant les autres cycles. Par exemple, la durée d'un cycle est comprise entre une heure et une année et, typiquement, comprise entre un jour et un mois. Ici, la durée d'un cycle est prise égale à une semaine.

Le profil 68 comprend autant de cellules Cⱼ que de plages horaires successives dans un cycle.

Les figures 3 et 4 représentent graphiquement et schématiquement le contenu de deux profils individuels différents. Pour simplifier les illustrations, seule une journée appelée par la suite « journée 1 » des profils est représentée sur les figures 3 et 4. Ici, chacun des profils a été représenté sous la forme d'un chronogramme. L'axe des abscisses représente donc le temps exprimé en heure et l'axe des ordonnées représente la valeur de la probabilité Pᵢ. Dans le profil de la figure 3, la probabilité que le terminal soit dans l'état actif entre 17h et 18h et entre 21h et 22h est de 0,5 et la probabilité qu'il soit actif entre 18h et 19h et entre 20h et 21h est de 1. En dehors de ces plages horaires, la probabilité Pᵢ est nulle. Le profil de la figure 3 correspond à un utilisateur qui éteint son terminal lorsqu'il ne regarde plus la télévision.

Dans le profil de la figure 4, la probabilité que le terminal soit dans l'état actif entre 0 et 24 heures est constante et égale à 1. Cela correspond à un utilisateur qui n'éteint jamais son terminal même lorsqu'il ne regarde pas la télévision.

La figure 5 représente plus en détail un exemple d'implémentation du relevé 70. Le relevé 70 archive les instants de basculement du terminal entre les états actif et inactif observés sur plusieurs cycles précédant la date courante. Dans cet exemple, le relevé 70 est implémenté sous la forme d'une table ayant plusieurs colonnes et autant de lignes que de plages horaires dans un cycle. Chaque ligne correspondant à une plage horaire PHⱼ. Il y a donc N lignes où N est un nombre entier de plages horaires. Chaque colonne correspond à un cycle particulier d'utilisation du terminal. Une cellule est présente à l'intersection de chaque ligne et chaque colonne. Cette cellule comprend un « 1 » si le terminal était dans l'état actif depuis le début jusqu'au moins le milieu de la plage horaire correspondante à cette ligne pendant le cycle identifié par cette colonne. Dans le cas contraire, la cellule comprend un « 0 ». Ici, pour simplifier l'illustration, la table de la figure 5 comprend uniquement deux colonnes Cy₁ et Cy₂ correspondant, respectivement à des cycles « 1 » et « 2 ». La colonne Cy₁ correspond au cycle courant et la colonne Cy₂ correspond au cycle immédiatement précédant le cycle Cy₁. Le cycle courant est le cycle contenant la date courante.

Un exemple de relevé sur un cycle de vingt-quatre heures est illustré par le graphe de la figure 6. Dans ce graphe, l'axe des abscisses représente le temps et l'axe des ordonnées représente l'état actif (valeur 1) et l'état inactif (valeur 0). La courbe 80 représenté l'évolution au cours du temps du relevé des instants de basculement observés par le terminal.

La figure 7 représente schématiquement la structure d'un message 84 de convocation. Ce message 84 comporte :
- un identifiant Iₘₐⱼ de la mise à jour logicielle à télécharger, et
- une définition d'une plage temporelle Pl pour établir une première connexion.

La plage Pl est la plage dans laquelle doivent se répartir les différentes premières connexions des terminaux au serveur 24 de rendez-vous en réponse à ce message de convocation.

Le message de convocation est typiquement diffusé par le dispositif 6 pour signaler à l'ensemble des terminaux qu'une mise à jour logicielle est disponible et doit être téléchargée par ceux-ci.

La plage Pl est par exemple définie par une date de fin et, éventuellement une date de début. Elle s'étend sur une durée assez longue, c'est-à-dire une durée supérieure à 10 minutes et, de préférence, supérieure à une heure ou trois heures. Cette plage est suffisamment grande pour permettre à plusieurs centaines et, de préférence, plusieurs milliers, dizaines de milliers ou centaines de milliers de terminaux de se connecter pendant cette plage aux serveurs 24 ou 26.

La figure 8 représente un mode d'implémentation particulier du plan 32 de charge. Dans ce mode de réalisation, le plan 32 est implémenté sous la forme d'une table qui associe à chaque date une charge prévisionnelle de travail du serveur 26 de transaction. Ici, cette table associe à chaque plage horaire d'un cycle une cellule Tⱼ. La cellule Tⱼ comporte le nombre prévu de connexions simultanées au serveur de transaction pendant cette plage horaire. Un nombre Ncₘₐₓ maximal de connexions simultanées que peut supporter le serveur 26 est également connu et mémorisé, par exemple, dans la mémoire 28. Dans ce mode de réalisation, le taux prévisionnel d'occupation est égal au nombre prévu de connexions simultanées rapporté au nombre Ncₘₐₓ. Le nombre Ncₘₐₓ est supérieur à 1 000 ou 5 000 ou 10 000.

La figure 9 représente un mode particulier d'implémentation du profil commun 34 d'utilisation. Ce profil 34 associe à chaque date une probabilité commune d'état Pc. La probabilité Pc correspond à la probabilité qu'un terminal quelconque du système 2 soit dans l'état actif à cette date à venir. Les différentes valeurs de la probabilité Pc font donc ressortir les plages horaires où il y a plus de chances qu'un très grand nombre de terminaux soient dans l'état inactif. La plage horaire où il est le plus probable qu'un très grand nombre de terminaux soient dans l'état inactif est ici appelée « heure creuse ».

Dans ce mode de réalisation, le profil commun 34 est implémenté de façon identique à ce qui a été décrit pour le profil individuel 68 sauf que les cellules Cⱼ de la table associent à chaque plage horaire une valeur de la probabilité Pc et non pas une valeur de la probabilité Pᵢ.

Le fonctionnement du système 2 va maintenant être décrit en référence au procédé de la figure 10.

Le fonctionnement des différents terminaux étant identiques, le procédé de la figure 10 décrit uniquement le fonctionnement du terminal 10.

Lors d'une étape 100, le terminal 10 relève les instants où il bascule entre les états actif et inactif. On suppose ici qu'au début d'un nouveau cycle, la colonne Cy₁ du relevé 70 contient uniquement des « 0 » dans chaque cellule.

Lorsque le terminal est dans l'état actif, lors d'une opération 102, il compare la date courante fournie par son horloge interne 64 aux dates correspondantes au début des plages horaires Phⱼ pour identifier le début de la prochaine plage horaire.

Ensuite, lors d'une opération 104, le calculateur 62 compare la date courante fournie par l'horloge 64 à une date correspondant au milieu de la prochaine plage horaire identifiée lors de l'opération 102. Tant que le milieu de cette plage horaire n'est pas dépassé par la date courante, le calculateur 62 exécute en boucle l'opération 104. Lorsque la date courante dépasse le milieu de la prochaine plage horaire, il est procédé à une opération 106.

Lors de l'opération 106, le terminal écrit un « 1 » dans la cellule correspondante à cette plage horaire dans la colonne Cy₁.

Ensuite, les opérations 102 à 106 sont réitérées en boucle.

Lorsque la date courante dépasse la date de fin de la dernière plage horaire de la colonne Cy₁, la colonne Cy₁ est déplacée, lors d'une opération 108, pour remplacer la colonne Cy₂ et une nouvelle colonne Cy₁ contenant uniquement des « 0 » est créée.

Ainsi, le relevé 70 permet de conserver un historique des instants de basculement relevés sur une fenêtre glissante égale à deux cycles.

Ensuite, lors d'une étape 110 exécutée, par exemple, à chaque fin de cycle, le calculateur 62 construit le profil individuel 68. Pour cela, le calculateur 62 calcule la moyenne des contenus de chaque ligne dans le relevé 70. Ainsi, le profil individuel 68 est uniquement construit à partir du relevé des instants de basculement de ce terminal 10. De plus, il est construit grâce à une moyenne glissante ce qui permet de réagir assez rapidement en cas de changement dans les habitudes d'utilisation du terminal.

Ce calcul de la valeur de la probabilité Pᵢ est illustré par les chronogrammes des figures 11, 12 et 3. Pour simplifier les illustrations, ces graphes ne représentent qu'une seule journée du cycle.

Les chronogrammes des figures 11 et 12 représentent les relevés d'instants de basculement du terminal 10 pour la journée « 1 » des cycles « 1 » et « 2 ». Sur ces chronogrammes, les axes des abscisses et des ordonnées représentent, respectivement, le temps exprimé en heures et l'état du terminal de façon similaire à ce qui a été décrit pour le graphe de la figure 6. Ces chronogrammes montrent que le terminal 10 a été dans l'état actif uniquement entre :
- 17h et 19h et 20h et 21h pendant la journée « 1 » du cycle « 1 », et
- entre 18h et 19h et 20h et 22h pour la journée « 1 » du cycle « 2 ».

La moyenne des relevés dans les cycles « 1 » et « 2 » pour la journée « 1 » entre 17h et 18h est ici égale à 0,5. Cette valeur donne la valeur de la probabilité Pᵢ entre 17h et 18h pendant la journée « 1 ». On procède ainsi pour chaque plage horaire ce qui permet d'obtenir le profil individuel d'utilisation représenté sur la figure 3.

Ensuite, lors d'une étape 112, le profil individuel 68 construit est enregistré dans la mémoire 66 à la place du précédent profil individuel d'utilisation.

Les étapes 110 et 112 sont réitérées en permanence lorsque le terminal est dans l'état actif pour actualiser sans cesse le profil individuel 68.

En parallèle, lors d'une étape 120, le dispositif 20 diffuse en permanence les contenus multimédias embrouillés et des messages ECM et EMM (Entitlement Management Message) multiplexés ensemble vers tous les terminaux par l'intermédiaire du réseau 8.

Lors d'une étape 122, chaque terminal dans l'état actif reçoit le contenu multimédia embrouillé et les messages ECM et EMM. Lors de cette étape, le décodeur 50 transmet les messages ECM et EMM au processeur 52 de sécurité.

Lors d'une étape 124, le processeur 52 déchiffre le cryptogramme des mots de contrôle contenus dans le message ECM et transmet le mot de contrôle ainsi déchiffré au décodeur 50.

En réponse, lors d'une étape 126, le désembrouilleur 56 désembrouille le contenu multimédia embrouillé et le transmet à la carte vidéo 58 pour qu'il soit affiché en clair sur l'écran 60.

Les étapes 120 à 126 sont réitérées en boucle.

En parallèle des étapes précédentes, lors d'une étape 130, lorsqu'une mise à jour du logiciel du décodeur 50 ou du processeur 52 devient nécessaire, le dispositif 20 diffuse le message 84 de convocation au travers du réseau 8. La diffusion est une diffusion multipoints plus connue sous le terme anglais de « multicast ». Le canal utilisé pour diffuser ce message 84 est par exemple le même que celui utilisé pour diffuser les messages EMM. Ce message 84 est rediffusé à intervalles réguliers tant que tous les terminaux ne se sont pas connectés au moins une fois au serveur 24 de rendez-vous.

Lors d'une étape 132, le terminal 10 écoute en permanence ce canal quand il est dans l'état actif. Ainsi, lors de l'étape 132, le terminal 10 reçoit le message 84.

Lors d'une étape 134, en réponse au message 84, le calculateur 62 détermine une date de première connexion. La date de première connexion est déterminée de manière à répartir le plus uniformément possible dans le temps les premières connexions des terminaux au serveur 24. Par exemple, le calculateur 62 tire de façon aléatoire ou pseudo aléatoire une date de première connexion contenue dans la plage Pl contenue dans le message 84.

Ensuite, lors d'une étape 136, le terminal 10 déclenche l'établissement de cette première connexion au serveur 24 en fonction de la date de première connexion déterminée. A cet effet, le calculateur 62 surveille si la date de première connexion est arrivée ou dépassée. Pour cela, par exemple, il compare à intervalles réguliers la date courante délivrée par l'horloge interne 64 à la date de première connexion. Tant que la date courante reste antérieure à la date de première connexion, le calculateur 62 inhibe le déclenchement de l'établissement de cette première connexion. A l'inverse, dès que la date courante est égale ou postérieure à la date de première connexion, le calculateur 62 déclenche l'établissement de cette première connexion. Cette première connexion est une connexion point à point établie entre le terminal 10 et le serveur 24 par l'intermédiaire du réseau 30.

Lors de cette première connexion, comme lors des connexions suivantes, le terminal 10 transmet au serveur 24 une requête de mise à jour. La requête de mise à jour contient notamment :
- un code de priorité indiquant si le traitement doit être immédiatement exécuté ou ou s'il peut être reporté à plus tard,
- son profil individuel 68 d'utilisation, et
- son certificat électronique CE_{T}.

Lors d'une étape 138, le serveur 24 vérifie l'authenticité du terminal 10 à partir du certificat CE_{T} reçu. Si l'authentification est incorrecte, c'est-à-dire que l'identifiant du terminal reçu ne correspond pas à l'identifiant utilisé pour construire la signature numérique contenue dans le certificat électronique CE_{T}, alors le procédé retourne à l'étape 130.

Dans le cas contraire, le procédé se poursuit par une étape 140 lors de laquelle le serveur 24 vérifie si la requête de mise à jour reçue contient un indice de priorité indiquant que le traitement doit être immédiatement exécuté. Dans l'affirmative, le serveur 24 commande alors le serveur 26 pour déclencher l'exécution immédiate du traitement requis.

Dans le cas contraire, lors d'une étape 142, le serveur 24 mesure la charge actuelle de travail du serveur 26. Ici, le serveur 24 dénombre le nombre actuel C_{A} de connexions simultanées au serveur 26. Si ce nombre C_{A} est inférieur à un seuil prédéterminé S_{delayed} prédéterminé, il procède immédiatement à une étape 144 lors de laquelle le traitement requis par le terminal est immédiatement exécuté par le serveur 26.

Lors de l'étape 142, le serveur 24 construit et met à jour le profil commun 34 à partir du profil 68 reçu lors de l'étape 136. Par exemple, pour cela, il calcule la moyenne des X derniers profils individuels d'utilisation reçus pour obtenir un profil moyen d'utilisation. X est un nombre entier supérieur à 10, 100 ou 1000. Ce profil moyen d'utilisation constitue alors le nouveau profil commun 34.

Ici, lors de l'étape 144, le terminal 10 télécharge à partir du serveur 26 la mise à jour logicielle correspondant à l'identifiant Iₘₐⱼ.

Si la charge actuelle C_{A} mesurée est supérieure au seuil S_{delayed} alors il est procédé à une étape 146 de calcul d'une date de rendez-vous entre ce terminal 10 et le serveur 26 de transaction.

Pour cela, lors d'une opération 148, le serveur 24 commence par détecter si le terminal 10 est en permanence dans l'état actif. A cet effet, par exemple, il calcule la différence δ entre la plus grande et la plus petite valeur de la probabilité Pᵢ contenue dans son profil individuel 68. Ensuite, il compare cette différence δ à un seuil prédéterminé ε. Par exemple, le seuil ε est inférieur à 0,2*Max(Pᵢ) et de préférence inférieur à 0,1*Max(Pᵢ) ou 0,05*Max(Pᵢ), où Max(Pᵢ) est la plus grande valeur de la probabilité Pᵢ.

Si la différence δ est inférieure au seuil ε, alors le terminal 10 est considéré comme étant en permanence dans l'état actif. Dans ce cas, il est procédé à une opération 150 de sélection de la date de rendez-vous en prenant en compte, en plus du plan 32 de charge et du profil individuel 68, le profil commun 34 d'utilisation.

Dans le cas contraire, le terminal 10 est considéré comme n'étant pas systématiquement dans l'état actif. Il est alors procédé à une opération 152 de sélection de la date de rendez-vous en fonction du plan de charge 32 et du profil individuel 68 sans utiliser le profil commun 34.

Lors de l'opération 150, le serveur 24 sélectionne la date de rendez-vous associée dans le profil commun 34 à une valeur de la probabilité Pc inférieure à un seuil S₀ prédéterminé. Ici, le seuil S₀ est déterminé dynamiquement. Par exemple, il est choisi égal à la plus faible valeur de la probabilité Pc pour laquelle la charge prévisionnelle du serveur 26 est inférieure à un seuil prédéterminé S₁. Par exemple, le seuil S₁ est choisi égal à Ncₘₐₓ.

Par exemple, pour cela, le serveur 24 marque toutes les plages horaires du plan de charge 32 pour lesquelles la charge prévisionnelle est supérieure ou égale au seuil S₁ comme étant « indisponible ». Ensuite, le serveur 24 sélectionne une date de rendez-vous dans une plage horaire à la fois :
- disponible, c'est-à-dire qu'elle n'a pas été marquée comme « indisponible » dans le plan de charge, et
- correspondant à la plus faible valeur de la probabilité Pc associée à des plages horaires disponibles.

Cette opération 150 permet d'optimiser la charge de travail du serveur 26 pendant les heures creuses. En effet, les mises à jour logicielles des terminaux en permanence dans l'état actif sont ainsi de préférence réalisées pendant ces heures creuses.

Lors de l'opération 152, le serveur 24 sélectionne une date de rendez-vous associée à la fois :
- dans le plan de charge 32, à une charge prévisionnelle inférieure à un seuil prédéterminé tel que le seuil S₁ et,
- dans le profile individuel 68, à une valeur de la probabilité Pᵢ supérieure à un seuil prédéterminé S₂.

De plus, le serveur 24 sélectionne automatiquement parmi les différentes dates remplissant les deux conditions précédentes, systématiquement, la date qui est la plus proche de la date courante actuelle.

Après avoir construit la date de rendez-vous, lors d'une étape 154, le serveur 24 génère un certificat électronique temporaire contenant un identifiant du terminal, la date de rendez-vous construite et une date de validité de ce certificat. Ce certificat électronique temporaire comprend également une signature numérique obtenue, par exemple, en chiffrant l'identifiant du terminal, la date de rendez-vous et la date de validité avec la clé privée Kₛₚ de la tête de réseau 4.

L'identifiant du terminal est par exemple son adresse sur le réseau 30 tel que son adresse IP (Internet Protocol) ou le même identifiant que celui contenu dans le certificat électronique CE_{T}.

La date de validité est définie en fonction de la date de rendez-vous construite. Par exemple, la date de validité est égale à la date de rendez-vous construite à laquelle est ajoutée une durée δT prédéterminée. Par exemple la durée δT est inférieure à 60s, 5 min ou 15 min.

Lors d'une étape 156, le serveur 24 transmet au terminal 10 le certificat électronique temporaire par l'intermédiaire de la première connexion point à point.

Ensuite, lors d'une étape 158, le serveur 24 ou 26 construit et met à jour le plan de charge 32 en fonction de la nouvelle date de rendez-vous construite. Pour cela, par exemple, il ajoute une unité au nombre prévu de connexions contenues dans la cellule Tⱼ correspondante à cette date de rendez-vous.

La durée d'exécution des étapes 146 à 158 est strictement inférieure et, de préférence au moins dix ou cent fois inférieure, à la durée d'exécution du traitement pendant l'étape 144. Ainsi, dans le même temps, le serveur 24 est capable de calculer plus de dates de rendez-vous que de traitements exécutés par le serveur 26.

Lors d'une étape 160, le terminal 10 se déconnecte des serveurs 24 et 26. Ensuite, lors de cette étape, il surveille en permanence l'arrivée de la date de rendez-vous. Par exemple, il compare régulièrement la date courante issue de l'horloge 64 à la date de rendez-vous. Si la date courante est antérieure à la date de rendez-vous, le procédé reste dans l'étape 160. Ainsi, tant que la date courante est antérieure à la date de rendez-vous, le calculateur 62 inhibe le déclenchement de l'établissement de la connexion vers le serveur 26.

Lorsque la date courante est égale ou postérieure à la date de rendez-vous calculée, le terminal procède à une étape 162. Lors de l'étape 162, le terminal 10 déclenche l'établissement de la connexion point à point au serveur 26 de transaction et transmet, par l'intermédiaire de cette connexion, la requête de mise à jour ainsi que le certificat électronique temporaire reçu lors de l'étape 156.

Lors d'une étape 164, le serveur 26 compare la date de validité du certificat temporaire transmis à la date courante délivrée par son horloge interne 22.

Si la date courante est postérieure à la date de validité ou antérieure à la date de rendez-vous, le procédé retourne, par exemple, à l'étape 134. Pour cela la connexion entre le serveur 26 et le terminal 10 est interrompue et le terminal 10 établit une nouvelle connexion avec le serveur 24. Lors de la nouvelle exécution de l'étape 134, la nouvelle date de première connexion déterminée peut être en dehors de la plage Pl.

Si la date courante est comprise entre la date de rendez-vous et la date de validité, il est procédé à une étape 166 lors de laquelle le serveur 26 vérifie l'authenticité du certificat temporaire à partir de la signature numérique et de la clé publique Kₛₚᵤ. Lors de cette étape, le serveur 26 vérifie également qu'un identifiant du terminal, tel que son adresse IP (Internet protocol) ou celui contenu dans le certificat CE_{T}, correspond à celui contenu dans le certificat temporaire. Si l'authenticité du certificat électronique temporaire n'est pas correcte ou si la correspondance entre les identifiants du terminal comparés n'est pas établie, alors le procédé retourne, par exemple, à l'étape 134 comme précédemment décrit. Dans le cas contraire, le procédé retourne à l'étape 142.

Normalement, si les prévisions du plan de charge 32 sont correctes, lors de cette seconde exécution de l'étape 142, il est déterminé que la charge de travail du serveur 26 est suffisamment faible pour que le traitement requis puisse être exécuté par ce serveur.

De nombreux autres modes de réalisation sont possibles. Par exemple, le message de convocation est diffusé jusqu'à ce qu'un seuil prédéterminé des terminaux aient reçu ce message de convocation et se soient connectés au moins une fois au serveur 24 de rendez-vous. Lorsque ce seuil prédéterminé est atteint, la diffusion du message de convocation cesse. Ensuite, le serveur 24 impose une mise à jour des terminaux restants. Par exemple, il transmet, par l'intermédiaire d'une liaison point à point, à chaque terminal restant un message de mise en demeure de réaliser la mise à jour sous peine de révocation de leur abonnement.

Le seuil S_{delayed} peut être choisi égal à zéro de sorte qu'aucun traitement immédiat des requêtes n'est possible. Dans cette variante, la première connexion est uniquement utilisée pour obtenir une date de rendez-vous.

Le seuil S_{delayed} peut aussi être ajusté dynamiquement. Par exemple, si le serveur de rendez-vous mesure que le nombre de connexions établies simultanément pour exécuter un traitement prioritaire dépasse un seuil Sₘₐₓₚ, alors le seuil S_{delayed} est diminué d'un pas prédéterminé pour réserver plus de capacité de traitement aux traitements prioritaires.

Les différentes architectures matérielles peuvent être mises en oeuvre pour implémenter les fonctionnalités des serveurs 24 et 26. Par exemple, en variante, les serveurs 24 et 26 sont remplacés par un seul et même serveur utilisant le même calculateur électronique pour remplir les fonctions des serveurs 24 et 26.

Le serveur de rendez-vous peut être implémenté ailleurs que dans la tête de réseau. Par exemple, il est implémenté dans un serveur indépendant de cette tête de réseau et raccordé à cette de réseau par l'intermédiaire d'un réseau grande distance de transmission d'informations.

Des fonctionnalités du serveur de rendez-vous peuvent aussi être implémentées dans chaque terminal. Par exemple, dans ce cas, la tête de réseau 4 ou le serveur 26 de transaction transmet son plan de charge au terminal pour que celui-ci puisse sélectionner la date de rendez-vous à la fois en fonction de ce plan de charge et de son profil individuel d'utilisation. Typiquement, le calcul de la date de rendez-vous est identique à ce qui a été décrit dans le procédé de la figure 10. Ensuite, le terminal transmet la date de rendez-vous calculée au serveur de transaction pour que le plan de charge puisse être mis à jour en fonction de cette nouvelle date de rendez-vous.

La mise à jour du plan de charge peut être réalisée par le serveur 24 ou 26.

Le seuil S₂ prédéterminé auquel est comparée la probabilité d'état Pᵢ pour sélectionner la date de rendez-vous peut être déterminé en fonction du même profil individuel d'utilisation. Par exemple, le seuil S₂ est pris égal au maximum de la probabilité Pᵢ dans le profil 68.

Le profil d'utilisation peut être réalisé de différentes façons. Par exemple, les profils d'utilisation peuvent contenir la probabilité qu'un terminal ou que l'ensemble des terminaux soient dans l'état inactif à la place de la probabilité qu'ils soient dans l'état actif. Dans ce cas, il est possible de calculer la probabilité que le terminal soit dans l'état actif à partir de la probabilité que ce terminal soit dans l'état inactif. Ainsi, le procédé précédemment décrit peut facilement être adapté à cette situation.

Le profil d'utilisation peut également être construit uniquement à partir des instants de basculement relevés sur un seul cycle. De préférence le cycle est le dernier cycle réalisé. Dans ce cas, par exemple, la probabilité que le terminal soit dans l'état actif dans une plage horaire est prise égale à « 1 » si le terminal était dans l'état actif dans cette même plage horaire pendant le dernier cycle sinon la probabilité est prise égale à « 0 ». Ainsi, dans cette variante, la probabilité d'état n'est pas calculée à partir d'une moyenne d'instants de basculement enregistrés sur plusieurs cycles.

A l'inverse, les profils d'utilisation peuvent aussi être construits à partir des instants de basculement relevés sur plus de deux cycles.

Les durées des plages horaires ne sont pas nécessairement toutes identiques.

Le profil d'utilisation peut comporter plusieurs périodes différentes découpées elles-mêmes en plages horaires. Par exemple, une première période de vingt-quatre heures correspond aux jours de la semaine et une seconde période de vingt-quatre heures correspond aux jours du week-end. On suppose dans ce cas que le comportement de l'utilisateur pendant les jours de la semaine a une cyclicité d'un jour de même que pendant les jours du week-end.

Il existe également d'autres façons de réaliser le plan de charge. Par exemple, dans un autre mode de réalisation, le plan de charge associe à chaque date de rendez-vous possible un taux d'inoccupation du serveur à la place de la charge prévisionnelle du serveur. La charge prévisionnelle du serveur peut être déduite du taux d'inoccupation prévu. Ainsi, le fonctionnement de ce mode de réalisation se déduit du fonctionnement du procédé de la figure 10.

Le seuil δ indiquant si le terminal est en permanence dans l'état actif peut aussi être calculé par le terminal et transmis au serveur dans sa requête de mise à jour.

Le serveur de rendez-vous peut générer des dates de rendez-vous pour plusieurs serveurs de transaction. Dans ce cas, le serveur de rendez-vous sélectionne le plan de charge du serveur de transaction capable de réaliser le traitement requis, parmi les différents plans de charge de chacun des serveurs de transaction possibles. Seul le plan de charge sélectionné est utilisé pour calculer la date de rendez-vous.

En variante, l'authentification du terminal et du serveur ainsi que la génération du certificat électronique temporaire et son utilisation sont omises.

Dans une autre variante, l'état inactif ne correspond pas seulement à l'état éteint ou en veille du terminal. Par exemple, le terminal est considéré comme étant dans l'état inactif lorsqu'il est occupé à exécuter une tâche prioritaire. Une tâche est définie comme étant prioritaire si :
- son exécution est ralentie par la connexion, en même temps, au serveur de transaction, et
- l'utilisateur peut percevoir ce ralentissement de l'exécution de la tâche prioritaire.

Par exemple, une tâche prioritaire est la navigation de l'utilisateur dans un menu du terminal. Une tâche prioritaire peut aussi être le désembrouillage du contenu multimédia et son affichage en clair lorsque l'utilisateur est en train de regarder ce contenu. On considère qu'un utilisateur est en train de regarder un contenu multimédia si depuis moins de X heures, il a agit sur le terminal par l'intermédiaire d'une interface homme-machine locale du terminal. Typiquement, X est inférieur à trois ou deux heures. Par exemple, s'il y a moins de X heures, l'utilisateur a changé de chaîne, monté le son ou navigué dans un menu interactif du terminal, alors on considère que le terminal est dans l'état inactif pour donner la priorité au traitement des actions demandées par l'utilisateur.

## Revendications

1. Procédé de lissage de la charge de travail d'un serveur de transaction exécutant des traitements en réponse à des requêtes transmises par des terminaux distants et distincts les uns des autres, ce procédé comportant :
- après ou lors d'une première connexion entre le terminal et un serveur de rendez-vous, le calcul (146), par le serveur de rendez-vous ou par le terminal, d'une date de rendez-vous à laquelle le terminal doit établir une seconde connexion avec le serveur de transaction pour lui transmettre ladite requête,
- le déclenchement (162) de l'établissement par ce terminal de cette seconde connexion en fonction de la date de rendez-vous calculée de manière à ce que l'établissement de cette seconde connexion se produise uniquement au moment ou après que cette date de rendez-vous soit arrivée,
- la construction (158) d'un plan de charge du serveur de transaction en fonction des dates de rendez-vous calculées, ce plan de charge associant à chaque date possible une charge prévisionnelle de travail de ce serveur de transaction à cette date, **caractérisé en ce que** le procédé comporte :
- pour chaque terminal, le relevé (100) des instants de basculement entre :
• un état actif du terminal dans lequel ce terminal est capable d'établir la seconde connexion avec le serveur de transaction, et
• un état inactif du terminal dans lequel ce terminal est incapable d'établir cette seconde connexion avec le serveur de transaction,
- la construction (110) pour chaque terminal, à partir des instants de basculement relevés, d'un profil individuel d'utilisation associant à chaque date possible à venir une probabilité d'état correspondant à la probabilité que ce terminal soit dans l'état actif à cette date,
- le calcul (146) de la date de rendez-vous consiste à sélectionner une date de rendez-vous en fonction du plan de charge et du profil individuel, c'est-à-dire à sélectionner une date de rendez-vous associée dans le plan de charge du serveur de transaction à une charge prévisionnelle de travail inférieure à un premier seuil prédéterminé et, à la fois, associée dans le profil individuel d'utilisation de ce terminal à une probabilité d'état correspondant à une probabilité que ce terminal soit dans l'état actif supérieure à un second seuil prédéterminé,
- avant le calcul de la date de rendez-vous :
• lorsque ce calcul est réalisé par le serveur de rendez-vous, le terminal déclenche (136) l'établissement de la première connexion avec le serveur de rendez-vous et transmet (136) son profil individuel d'utilisation construit à ce serveur de rendez-vous et, en réponse, reçoit la date de rendez-vous calculée en fonction de son profil individuel d'utilisation, puis interrompt (160) cette première connexion avant la date de rendez-vous calculée, ou
• lorsque ce calcul est réalisé par le terminal, une tête de réseau transmet le plan de charge au terminal pour que celui-ci puisse sélectionner la date de rendez-vous à la fois en fonction de ce plan de charge et de son profil individuel d'utilisation et, ensuite, le terminal transmet la date de rendez-vous calculée au serveur de transaction pour que le plan de charge puisse être mis à jour en fonction de cette nouvelle date de rendez-vous.

2. Procédé selon la revendication 1, dans lequel le procédé comporte :
- la construction (142) d'un profil commun d'utilisation à partir des instants de basculement enregistrés pour tous les terminaux, ce profil commun associant à chaque date possible à venir une probabilité commune d'état correspondant à la probabilité qu'un terminal quelconque parmi les différents terminaux soit dans l'état actif,
- si, quelle que soit la date à venir, le profil individuel d'un terminal associe, à chacune de ces dates à venir, une probabilité individuelle d'état correspondant à une probabilité que ce terminal soit dans l'état actif supérieure au second seuil prédéterminé, alors le calcul de la date de rendez-vous consiste à sélectionner (150) une date de rendez-vous qui est associée à la fois:
• dans le plan de charge du serveur de transaction, à une charge prévisionnelle de travail inférieure au premier seuil prédéterminé,
• dans le profil individuel d'utilisation de ce terminal, à une probabilité d'état correspondant à une probabilité que ce terminal soit dans l'état actif supérieure au second seuil prédéterminé, et
• dans le profil commun d'utilisation à une probabilité commune d'état correspondant à une probabilité qu'un terminal quelconque parmi les différents terminaux soit dans l'état actif inférieure à un troisième seuil prédéterminé.

3. Procédé selon l'une quelconque des revendications précédentes, dans lequel le calcul de la date de rendez-vous consiste en plus à sélectionner automatiquement la date de rendez-vous la plus proche de la date courante.

4. Procédé selon l'une quelconque des revendications précédentes, dans lequel le calcul de la date de rendez-vous est réalisé par le serveur de rendez-vous.

5. Procédé selon l'une quelconque des revendications précédentes, dans lequel lors de la première connexion :
- le terminal transmet (136) au serveur de rendez-vous un certificat électronique contenant un identifiant de ce terminal et une signature numérique de cet identifiant de terminal avec une clé privée connue de ce seul terminal, puis
- le serveur de rendez-vous vérifie (138) l'authenticité de l'identifiant du terminal à partir du certificat électronique reçu, puis
- si le terminal est correctement authentifié, une date de rendez-vous est calculée puis transmise à ce terminal, et
- si le terminal n'est pas correctement authentifié, aucune date de rendez-vous n'est calculée pour ce terminal.

6. Procédé selon la revendication 5, dans lequel :
- lors de la première connexion, uniquement si le terminal est correctement authentifié, le procédé comporte :
• la génération (154) d'un certificat électronique temporaire comportant au moins la date de rendez-vous calculée, un identifiant du terminal auquel cette date de rendez-vous a été allouée et une signature numérique de cette date calculée et de cette identifiant du terminal avec une clé privée propre au serveur de transaction, puis
• la transmission (156) de ce certificat électronique temporaire au terminal,
- lors de la seconde connexion, le procédé comporte :
• la transmission (162) par le terminal du certificat électronique temporaire reçu au serveur de rendez-vous ou au serveur de transaction,
• la vérification (166) de l'authenticité du certificat électronique temporaire et de la correspondance entre l'identifiant du terminal contenu dans ce certificat électronique temporaire et un identifiant du terminal ayant transmis ce certificat électronique temporaire, et
• si l'authenticité du certificat électronique temporaire est incorrecte ou si l'identifiant du terminal ayant transmis ce certificat électronique temporaire ne correspond pas à l'identifiant contenu dans ce certificat électronique temporaire reçu, alors l'exécution immédiate du traitement requis par ce terminal est systématiquement inhibée et, dans le cas contraire, l'exécution immédiate du traitement requis n'est pas systématiquement inhibée.

7. Procédé selon la revendication 6, dans lequel :
- lors de la première connexion, le certificat électronique temporaire généré comporte également une date de validité calculée à partir de la date de rendez-vous calculée, cette date de validité étant postérieure à la date de rendez-vous, et
- lors de la seconde connexion, le procédé comporte la comparaison (164) de la date courante à la date de validité du certificat électronique temporaire reçu et l'inhibition systématique de l'exécution immédiate du traitement requis par ce terminal si la date courante est postérieure à la date de validité du certificat électronique temporaire et, dans le cas contraire, l'exécution immédiate du traitement requis n'est pas systématiquement inhibée.

8. Procédé de fonctionnement d'un serveur de rendez-vous pour la mise en oeuvre d'un procédé conforme à l'une quelconque des revendications précédentes, dans lequel le serveur de rendez-vous:
- calcule (146) une date de rendez-vous à laquelle le terminal doit établir une seconde connexion avec le serveur de transaction pour lui transmettre ladite requête,
- construit (158) un plan de charge du serveur de transaction en fonction des dates de rendez-vous calculées, ce plan de charge associant à chaque date possible une charge prévisionnelle de travail de ce serveur de transaction à cette date, **caractérisé en ce que** :
- le serveur de rendez-vous reçoit (136) le profil individuel d'utilisation d'un terminal associant à chaque date possible à venir une probabilité d'état correspondant à la probabilité que ce terminal soit dans l'état actif à cette date,
- le serveur de rendez-vous calcule (146) la date de rendez-vous en sélectionnant une date de rendez-vous associée dans le plan de charge du serveur de transaction à une charge prévisionnelle de travail inférieure à un premier seuil prédéterminé et, à la fois, associée dans le profil individuel d'utilisation de ce terminal à une probabilité d'état correspondant à une probabilité que ce terminal soit dans l'état actif supérieure à un second seuil prédéterminé.

9. Procédé de fonctionnement d'un terminal pour la mise en oeuvre d'un procédé conforme à l'une quelconque des revendications 1 à 7, dans lequel ce terminal déclenche (162) l'établissement d'une seconde connexion avec le serveur de transaction en fonction de la date de rendez-vous calculée de manière à ce que l'établissement de cette seconde connexion se produise uniquement au moment ou après que cette date de rendez-vous soit arrivée,
**caractérisé en ce que**, le terminal :
- relève (100) des instants de basculement entre :
• un état actif du terminal dans lequel ce terminal est capable d'établir la seconde connexion avec le serveur de transaction, et
• un état inactif du terminal dans lequel ce terminal est incapable d'établir cette seconde connexion avec le serveur de transaction,
- construit (110), à partir des instants de basculement relevés, un profil individuel d'utilisation associant à chaque date possible à venir une probabilité d'état correspondant à la probabilité que ce terminal soit dans l'état actif à cette date
- transmet (136) son profil individuel d'utilisation construit à un serveur de rendez-vous et, en réponse, reçoit la date de rendez-vous calculée en fonction de son profil individuel d'utilisation.

10. Support (66) d'enregistrement d'informations comportant des instructions pour exécuter un procédé conforme à l'une quelconque des revendications précédentes, lorsque ces instructions sont exécutées par un calculateur électronique (62) d'un terminal, ce support comportant à cet effet des instructions pour exécuter les étapes suivantes :
- après ou lors d'une première connexion entre le terminal et un serveur de rendez-vous, le calcul (146), par le terminal, d'une date de rendez-vous à laquelle le terminal doit établir une seconde connexion avec le serveur de transaction pour lui transmettre la requête,
- le déclenchement (162) de l'établissement par ce terminal de cette seconde connexion en fonction de la date de rendez-vous calculée de manière à ce que l'établissement de cette seconde connexion se produise uniquement au moment ou après que cette date de rendez-vous soit arrivée,
**caractérisé en ce que** le support comporte aussi des instructions pour exécuter les étapes suivantes :
- le relevé (100) des instants de basculement entre :
• un état actif du terminal dans lequel ce terminal est capable d'établir la seconde connexion avec le serveur de transaction, et
• un état inactif du terminal dans lequel ce terminal est incapable d'établir cette seconde connexion avec le serveur de transaction,
- la construction (110), à partir des instants de basculement relevés, d'un profil individuel d'utilisation associant à chaque date possible à venir une probabilité d'état correspondant à la probabilité que ce terminal soit dans l'état actif à cette date,
- le calcul (146) de la date de rendez-vous consiste à sélectionner une date de rendez-vous en fonction du plan de charge et du profil individuel, c'est-à-dire à sélectionner une date de rendez-vous associée dans le plan de charge du serveur de transaction à une charge prévisionnelle de travail inférieure à un premier seuil prédéterminé et, à la fois, associée dans le profil individuel d'utilisation de ce terminal à une probabilité d'état correspondant à une probabilité que ce terminal soit dans l'état actif supérieure à un second seuil prédéterminé,
- avant le calcul de la date de rendez-vous, le terminal reçoit le plan de charge transmis par une tête de réseau pour que celui-ci puisse sélectionner la date de rendez-vous à la fois en fonction de ce plan de charge et de son profil individuel d'utilisation et, ensuite, le terminal transmet la date de rendez-vous calculée au serveur de transaction pour que le plan de charge puisse être mis à jour en fonction de cette nouvelle date de rendez-vous.

11. Support (66) d'enregistrement d'informations, **caractérisé en ce qu'**il comporte des instructions pour exécuter un procédé conforme à la revendication 9, lorsque ces instructions sont exécutées par un calculateur électronique (62) d'un terminal.

12. Support (28) d'enregistrement d'informations, **caractérisé en ce qu'**il comporte des instructions pour exécuter un procédé conforme à la revendication 8, lorsque ces instructions sont exécutées par un calculateur électronique (38) d'un serveur de rendez-vous.

13. Terminal comportant :
- une carte réseau (54) pour établir une connexion avec un serveur de transaction,
- un support (66) d'enregistrement d'informations,
- un calculateur (62) électronique programmable apte à exécuter des instructions enregistrées sur le support d'enregistrement d'informations,
**caractérisé en ce que** le support (66) d'enregistrement d'informations est conforme à la revendication 10 ou 11.

14. Terminal selon la revendication 13, dans lequel ce terminal comprend :
- un désembrouilleur (56) apte à désembrouiller un contenu multimédia embrouillé avec un mot de contrôle, et
- un processeur (52) de sécurité apte à déchiffrer un cryptogramme du mot de contrôle contenu dans un message Entitlement Control Message, ECM.

15. Serveur de rendez-vous comportant :
- un support (28) d'enregistrement d'informations,
- un calculateur (38, 40) électronique programmable apte à exécuter des instructions enregistrées sur le support d'enregistrement d'informations,
**caractérisé en ce que** le support (28) d'enregistrement d'informations est conforme à la revendication 12.

## Patentansprüche

1. Verfahren zum Glätten der Arbeitsbelastung eines Transaktionsservers, der Verarbeitungen als Reaktion auf Anfragen ausführt, die von entfernten Endgeräten, die voneinander getrennt sind, übertragen werden, wobei dieses Verfahren Folgendes umfasst:
- nach oder bei einer ersten Verbindung zwischen dem Endgerät und einem Rendezvous-Server, Berechnung (146) durch den Rendezvous-Server oder durch das Endgerät eines Rendezvous-Datums, an dem das Endgerät eine zweite Verbindung mit dem Transaktionsserver herstellen soll, um ihm die Anfrage zu übertragen,
- das Auslösen (162) des Herstellens dieser zweiten Verbindung durch dieses Endgerät in Abhängigkeit von dem berechneten Rendezvous-Datum derart, dass das Herstellen dieser zweiten Verbindung nur im Augenblick oder nach der Ankunft dieses Rendezvous-Datums erfolgt,
- dem Aufbau (158) eines Belastungsplans des Transaktionsservers in Abhängigkeit von den berechneten Rendezvous-Daten, wobei dieser Belastungsplan mit jedem möglichen Datum eine voraussichtliche Arbeitsbelastung dieses Transaktionsservers zu diesem Datum assoziiert, **dadurch gekennzeichnet, dass** das Verfahren Folgendes umfasst:
- für jedes Endgerät, das Erheben (100) der Wechselaugenblicke zwischen:
• einem aktiven Zustand des Endgeräts, in dem dieses Endgerät fähig ist, die zweite Verbindung mit dem Transaktionsserver herzustellen, und
• einem inaktiven Zustand des Endgeräts, in dem dieses Endgerät unfähig ist, diese zweite Verbindung mit dem Transaktionsserver herzustellen,
- das Aufbauen (110) für jedes Endgerät, ausgehend von den erhobenen Wechselaugenblicken, eines individuellen Nutzungsprofils, das mit jedem möglichen kommenden Datum eine Zustandswahrscheinlichkeit assoziiert, die der Wahrscheinlichkeit entspricht, dass dieses Endgerät zu diesem Datum in dem aktiven Zustand ist,
- wobei das Berechnen (146) des Rendezvous-Datums darin besteht, ein Rendezvous-Datum in Abhängigkeit von dem Belastungsplan und dem individuellen Profil auszuwählen, das heißt ein Rendezvous-Datum auszuwählen, das in dem Belastungsplan des Transaktionsservers mit einer voraussichtlichen Arbeitsbelastung assoziiert ist, die kleiner als ein vorbestimmter erster Schwellenwert ist, und gleichzeitig in dem individuellen Nutzungsprofil dieses Endgeräts mit einer Zustandswahrscheinlichkeit assoziiert ist, die einer Wahrscheinlichkeit entspricht, dass dieses Endgerät in dem aktiven Zustand ist, größer als ein vorbestimmter Schwellenwert ist,
- vor dem Berechnen des Rendezvous-Datums:
• wenn diese Berechnung von dem Rendezvous-Server ausgeführt wird, das Endgerät das Herstellen der ersten Verbindung mit dem Rendezvous-Server auslöst (136) und sein aufgebautes individuelles Nutzungsprofil zu diesem Rendezvous-Server überträgt (136), und als Reaktion das Rendezvous-Datum empfängt, das in Abhängigkeit von seinem individuellen Nutzungsprofil berechnet ist, dann diese erste Verbindung vor dem berechneten Rendezvous-Datum unterbricht (160), oder
• wenn diese Berechnung von dem Endgerät ausgeführt wird, ein Netzwerkkopf den Belastungsplan zu dem Endgerät überträgt, damit dieses das Rendezvous-Datum sowohl in Abhängigkeit von diesem Belastungsplan als auch von seinem individuellen Nutzungsprofil auswählen kann, und das Endgerät anschließend das berechnete Rendezvous-Datum zu dem Transaktionsserver überträgt, damit der Belastungsplan in Abhängigkeit von diesem neuen Rendezvous-Datum aktualisiert werden kann.

2. Verfahren nach Anspruch 1, bei dem das Verfahren Folgendes umfasst:
- den Aufbau (142) eines gemeinsamen Nutzungsprofils ausgehend von den Wechselaugenblicken, die für alle Endgeräte aufgezeichnet wurden, wobei dieses gemeinsame Profil mit jedem möglichen kommenden Datum eine gemeinsame Zustandswahrscheinlichkeit assoziiert, die der Wahrscheinlichkeit entspricht, dass ein beliebiges Endgerät der unterschiedlichen Endgeräte in dem aktiven Zustand ist,
- falls, ungeachtet des kommenden Datums, das individuelle Profil eines Endgeräts mit jedem dieser kommenden Daten eine individuelle Zustandswahrscheinlichkeit assoziiert, die einer Wahrscheinlichkeit entspricht, dass dieses Endgerät in dem aktiven Zustand ist, die größer ist als der vorbestimmte Schwellenwert, die Berechnung des Rendezvous-Datums darin besteht, ein Rendezvous-Datum auszuwählen (150) das sowohl:
• in dem Belastungsplan des Transaktionsservers mit einer voraussichtlichen Arbeitsbelastung kleiner als der erste vorbestimmte Schwellenwert assoziiert ist,
• in dem individuellen Nutzungsplan dieses Endgeräts mit einer Zustandswahrscheinlichkeit assoziiert ist, die einer Wahrscheinlichkeit entspricht, dass dieses Endgerät in dem aktiven Zustand ist, die größer als der zweite vorbestimmte Schwellenwert ist, und
• in dem gemeinsamen Nutzungsprofil mit einer gemeinsamen Zustandswahrscheinlichkeit assoziiert ist, die einer Wahrscheinlichkeit entspricht, dass ein beliebiges Endgerät unter den unterschiedlichen Endgeräten in dem aktiven Zustand ist, kleiner als ein dritter vorbestimmter Schwellenwert ist.

3. Verfahren nach einem der vorstehenden Ansprüche, wobei die Berechnung des Rendezvous-Datums außerdem darin besteht, automatisch das dem aktuellen Datum am nächsten liegende Rendezvous-Datum auszuwählen.

4. Verfahren nach einem der vorstehenden Ansprüche, wobei die Berechnung des Rendezvous-Datums durch den Rendezvous-Server ausgeführt wird.

5. Verfahren nach einem der vorstehenden Ansprüche, wobei bei der ersten Verbindung:
- das Endgerät dem Rendezvous-Server ein elektronisches Zertifikat überträgt (136), das einen Identifikator dieses Endgeräts enthält, und eine digitale Signatur dieses Endgerätidentifikators mit einem Geheimcode, der nur diesem Endgerät bekannt ist, dann
- der Rendezvous-Server die Authentizität des Identifikators des Endgeräts ausgehend von dem empfangenden elektronischen Zertifikat prüft (138), dann
- falls das Endgerät korrekt authentifiziert wird, ein Rendezvous-Datum berechnet und dann zu diesem Endgerät übertragen wird, und
- falls das Endgerät nicht korrekt authentifiziert wird, kein Rendezvous-Datum für dieses Endgerät berechnet wird.

6. Verfahren nach Anspruch 5, wobei:
- bei der ersten Verbindung, nur falls das Endgerät korrekt authentifiziert wird, das Verfahren Folgendes umfasst:
• das Erzeugen (154) eines zeitweiligen elektronischen Zertifikats, das mindestens das berechnete Rendezvous-Datum, einen Identifikator des Endgeräts, dem dieses Rendezvous-Datum zugeordnet wurde, und eine digitale Signatur dieses berechneten Datums und dieses Identifikators des Endgeräts mit einem Geheimcode, der dem Transaktionsserver eigen ist, umfasst, dann
• das Übertragen (156) dieses zeitweiligen elektronischen Zertifikats zu dem Endgerät,
- bei der zweiten Verbindung das Verfahren Folgendes umfasst:
• das Übertragen (162) durch das Endgerät des empfangenen zeitweiligen elektronischen Zertifikats zu dem Rendezvous-Server oder zu dem Transaktionsserver,
• das Prüfen (166) der Authentizität des zeitweiligen elektronischen Zertifikats und der Entsprechung zwischen dem Identifikator des Endgeräts, der in diesem zeitweiligen elektronischen Zertifikat enthalten ist, und einem Identifikator des Endgeräts, das dieses zeitweilige elektronische Zertifikat übertragen hat, und
• falls die Authentizität des zeitweiligen elektronischen Zertifikats falsch ist oder falls der Identifikator des Endgeräts, das dieses zeitweilige elektronische Zertifikat übertragen hat, nicht dem Identifikator entspricht, der in dem empfangenen zeitweiligen elektronischen Zertifikat enthalten ist, die sofortige Ausführung der Verarbeitung, die durch dieses Endgerät gefordert wird, systematisch unterbunden wird, und, in dem entgegengesetzten Fall, die sofortige Ausführung der geforderten Verarbeitung nicht systematisch unterbunden wird.

7. Verfahren nach Anspruch 6, wobei:
- bei der ersten Verbindung das erzeugte zeitweilige elektronische Zertifikat auch ein Gültigkeitsdatum umfasst, das ausgehend von dem berechneten Rendezvous-Datum berechnet wird, wobei dieses Gültigkeitsdatum später ist als das Rendezvous-Datum, und
- bei der zweiten Verbindung das Verfahren den Vergleich (164) des aktuellen Datums mit dem Gültigkeitsdatum des empfangenen zeitweiligen elektronischen Zertifikats und das systematische Unterbinden der sofortigen Ausführung der geforderten Verarbeitung durch dieses Endgerät, falls das aktuelle Datum später ist als das Gültigkeitsdatum des zeitweiligen elektronischen Zertifikats, und, in dem entgegengesetzten Fall, die sofortige Ausführung der geforderten Verarbeitung nicht systematisch unterbunden wird.

8. Verfahren zum Betreiben eines Rendezvous-Servers für das Umsetzen eines Verfahrens in Übereinstimmung mit einem der vorstehenden Ansprüche, wobei der Rendezvous-Server:
- ein Rendezvous-Datum berechnet (146), an dem das Endgerät eine zweite Verbindung mit dem Transaktionsserver aufbauen soll, um ihm die Anfrage zu übertragen,
- einen Belastungsplan des Transaktionsservers in Abhängigkeit von den berechneten Rendezvous-Daten aufbaut (158), wobei dieser Belastungsplan mit jedem möglichen Datum eine voraussichtliche Arbeitsbelastung dieses Transaktionsservers zu diesem Datum assoziiert,
**dadurch gekennzeichnet, dass**:
- der Rendezvous-Server das individuelle Nutzungsprofil eines Endgeräts empfängt (136), das mit jedem möglichen kommenden Datum eine Zustandswahrscheinlichkeit assoziiert, die der Wahrscheinlichkeit entspricht, dass dieses Endgerät zu diesem Datum in dem aktiven Zustand ist,
- der Rendezvous-Server das Rendezvous-Datum berechnet (146), indem er ein Rendezvous-Datum auswählt, das in dem Belastungsplan des Transaktionsservers mit einer voraussichtlichen Arbeitsbelastung assoziiert ist, die kleiner ist als ein erster vorbestimmter Schwellenwert und gleichzeitig in dem individuellen Nutzungsprofil dieses Endgeräts mit einer Zustandswahrscheinlichkeit assoziiert ist, die einer Wahrscheinlichkeit entspricht, dass dieses Endgerät in einem aktiven Zustand ist, die größer als ein vorbestimmter Schwellenwert ist.

9. Betriebsverfahren eines Endgeräts für das Umsetzen eines Verfahrens nach einem der Ansprüche 1 bis 7, wobei dieses Endgerät das Herstellen einer zweiten Verbindung mit dem Transaktionsserver in Abhängigkeit von dem berechneten Rendezvous-Datum derart auslöst (162), dass das Herstellen dieser zweiten Verbindung nur in dem Augenblick oder nachdem dieses Rendezvous-Datum erreicht wird, erfolgt,
**dadurch gekennzeichnet, dass** das Endgerät:
- Wechselaugenblicke erhebt (100) zwischen:
• einem aktiven Zustand des Endgeräts, in dem dieses Endgerät fähig ist, die zweite Verbindung mit dem Transaktionsserver herzustellen, und
• einem inaktiven Zustand des Endgeräts, in dem dieses Endgerät unfähig ist, diese zweite Verbindung mit dem Transaktionsserver herzustellen,
- für jedes Endgerät, ausgehend von den erhobenen Wechselaugenblicken, ein individuelles Nutzungsprofil aufbaut (110), das mit jedem möglichen kommenden Datum eine Zustandswahrscheinlichkeit assoziiert, die der Wahrscheinlichkeit entspricht, dass dieses Endgerät zu diesem Datum in dem aktiven Zustand ist,
- sein individuelles Nutzungsprofil zu einem Rendezvous-Server überträgt (136) und als Reaktion das Rendezvous-Datum empfängt, das in Abhängigkeit von seinem individuellen Nutzungsprofil berechnet ist.

10. Informationsaufzeichnungsträger (66), der Anweisungen zum Ausführen eines Verfahrens in Übereinstimmung mit einem der vorstehenden Ansprüche umfasst, wenn diese Anweisungen von einem elektronischen Rechner (62) eines Endgeräts ausgeführt werden, wobei dieser Träger dazu Anweisungen umfasst, um die folgenden Schritte auszuführen:
- nach oder bei einer ersten Verbindung zwischen dem Endgerät und einem Rendezvous-Server, die Berechnung (146) durch das Endgerät eines Rendezvous-Datums, an dem das Endgerät eine zweite Verbindung mit dem Transaktionsserver aufbauen soll, um ihm die Anfrage zu übertragen,
- das Auslösen (162) des Aufbauens dieser zweiten Verbindung durch dieses Endgerät in Abhängigkeit von dem berechneten Rendezvous-Datum derart, dass das Aufbauen dieser zweiten Verbindung nur im Augenblick oder nach dem Erreichen dieses Rendezvous-Datums erfolgt,
**dadurch gekennzeichnet, dass** der Träger auch Anweisungen umfasst, um die folgenden Schritte auszuführen:
- das Erheben (100) von Wechselaugenblicken zwischen:
• einem aktiven Zustand des Endgeräts, in dem dieses Endgerät fähig ist, die zweite Verbindung mit dem Transaktionsserver herzustellen, und
• einem inaktiven Zustand des Endgeräts, in dem dieses Endgerät unfähig ist, diese zweite Verbindung mit dem Transaktionsserver herzustellen,
- den Aufbau (110) ausgehend von den erhobenen Wechselaugenblicken eines individuellen Nutzungsprofils, das mit jedem möglichen kommenden Datum eine Zustandswahrscheinlichkeit assoziiert, die der Wahrscheinlichkeit entspricht, dass dieses Endgerät zu diesem Datum in dem aktiven Zustand ist,
- das Berechnen (146) des Rendezvous-Datums darin besteht, ein Rendezvous-Datum in Abhängigkeit von dem Belastungsplan und dem individuellen Profil auszuwählen, das heißt ein Rendezvous-Datum auszuwählen, das in dem Belastungsplan des Transaktionsservers mit einer voraussichtlichen Arbeitsbelastung kleiner als ein vorbestimmter erster Schwellenwert assoziiert ist, und gleichzeitig in dem individuellen Nutzungsprofil dieses Endgeräts mit einer Zustandswahrscheinlichkeit assoziiert ist, die einer Wahrscheinlichkeit entspricht, dass dieses Endgerät in einem aktiven Zustand ist, die größer als ein vorbestimmter Schwellenwert ist,
- vor dem Berechnen des Rendezvous-Datums das Endgerät den Belastungsplan empfängt, der von einem Netzwerkkopf übertragen wird, damit dieses das Rendezvous-Datum sowohl in Abhängigkeit von diesem Belastungsplan als auch von seinem individuellen Nutzungsprofil auswählen kann und anschließend das Endgerät das berechnete Rendezvous-Datum zu dem Transaktionsserver überträgt, damit der Belastungsplan in Abhängigkeit von diesem neuen Rendezvous-Datum aktualisiert werden kann.

11. Informationsaufzeichnungsträger (66), **dadurch gekennzeichnet, dass** er Anweisungen für das Ausführen eines Verfahrens nach Anspruch 9 umfasst, wenn diese Anweisungen von einem elektronischen Rechner (62) eines Endgeräts ausgeführt werden.

12. Informationsaufzeichnungsträger (28), **dadurch gekennzeichnet, dass** er Anweisungen zum Ausführen eines Verfahrens nach Anspruch 8 umfasst, wenn diese Anweisungen von einem elektronischen Rechner (38) eines Rendezvous-Servers ausgeführt werden.

13. Endgerät, das Folgendes umfasst:
- eine Netzwerkkarte (54), um eine Verbindung mit einem Transaktionsserver herzustellen,
- einen Informationsaufzeichnungsträger (66),
- einen programmierbaren elektronischen Rechner (62), der geeignet ist, um Anweisungen auszuführen, die auf dem Informationsaufzeichnungsträger aufgezeichnet sind,
**dadurch gekennzeichnet, dass** der Informationsaufzeichnungsträger (66) mit Anspruch 10 oder 11 übereinstimmt.

14. Endgerät nach Anspruch 13, wobei dieses Endgerät Folgendes umfasst:
- einen Entwürfler (56), der geeignet ist, um einen verwürfelten Multimedia-Inhalt mit einem Steuerwort zu entwürfeln, und
- einen Sicherheitsprozessor (52), der geeignet ist, um ein Kryptogramm des Steuerworts, das in einer Entitlement-Control-Message (ECM) enthalten ist, zu entziffern.

15. Rendezvous-Server, der Folgendes umfasst:
- einen Informationsaufzeichnungsträger (28),
- einen programmierbaren elektronischen Rechner (38, 40), der geeignet ist, um Anweisungen auszuführen, die auf dem Informationsaufzeichnungsträger aufgezeichnet sind,
**dadurch gekennzeichnet, dass** der Informationsaufzeichnungsträger (28) mit Anspruch 12 übereinstimmt.

## Claims

1. Method for smoothing the workload of a transaction server carrying out processing in response to requests transmitted by remote terminals which are separate from one another, this method comprising:
- after or during a first connection between the terminal and a rendezvous server, the calculation (146), by the rendezvous server or by the terminal, of a rendezvous date on which the terminal must establish a second connection with the transaction server in order to transmit said request to it,
- the launch (162) of the establishment by this terminal of this second connection on the basis of the calculated rendezvous date so that the establishment of this second connection takes place only at the moment of, or after, the occurrence of this rendezvous date,
- the construction (158) of a load plan for the transaction server based on the calculated rendezvous dates, this load plan associating with each possible date a predicted workload for this transaction server at this date,
**characterized in that** the method comprises:
- for each terminal, reading (100) the instants of switching between:
• an active state of the terminal in which this terminal is capable of establishing the second connection with the transaction server, and
• an inactive state of the terminal in which this terminal is incapable of establishing this second connection with the transaction server,
- constructing (110) for each terminal, on the basis of the instants of switching read, an individual use profile associating with each possible future date a state probability corresponding to the probability that this terminal will be in the active state on this date,
- the calculation (146) of the rendezvous date consists in selecting a rendezvous date based on the load plan and the individual profile, that is to say selecting a rendezvous date associated in the load plan for the transaction server with a predicted workload, which is below a first predetermined threshold while also being associated in the individual use profile of this terminal with a state probability corresponding to a probability that this terminal will be in the active state above a second predetermined threshold,
- before the calculation of the rendezvous date:
• if this calculation is carried out by the rendezvous server, the terminal launches (136) the establishment of the first connection with the rendezvous server, and transmits (136) its constructed individual use profile to this rendezvous server and, in response, receives the rendezvous date calculated on the basis of its individual use profile, then interrupts (160) this first connection before the calculated rendezvous date, or
• if this calculation is carried out by the terminal, a network head end transmits the load plan to the terminal so that the latter can select the rendezvous date on the basis of both this load plan and its individual use profile, and the terminal then transmits the calculated rendezvous date to the transaction server so that the load plan can be updated on the basis of this new rendezvous date.

2. Method according to Claim 1, wherein the method comprises:
- constructing (142) an individual use profile on the basis of the instants of switching recorded for all the terminals, this common profile associating with each possible future date a common state probability corresponding to the probability that any one terminal among the various terminals will be in the active state,
- if, regardless of the future date, the individual profile of a terminal associates, with each of these future dates, an individual state probability corresponding to a probability that this terminal will be in the active state above the second predetermined threshold, then the calculation of the rendezvous date consists in selecting (150) a rendezvous date which is simultaneously associated:
• in the load plan of the transaction server, with a predicted workload below the first predetermined threshold,
• in the individual use profile of this terminal, with a state probability corresponding to a probability that this terminal will be in the active state above the second predetermined threshold, and
• in the common use profile, a common state probability corresponding to the probability that any one terminal among the various terminals will be in the active state below a third predetermined threshold.

3. Method according to any of the preceding claims, wherein the calculation of the rendezvous date also consists in automatically selecting the rendezvous date closest to the current date.

4. Method according to any of the preceding claims, wherein the calculation of the rendezvous date is carried out by the rendezvous server.

5. Method according to any of the preceding claims, wherein, during the first connection:
- the terminal transmits (136) to the rendezvous server an electronic certificate containing an identifier of this terminal and a digital signature of this identifier of the terminal with a private key known to this terminal only, then
- the rendezvous server checks (138) the authenticity of the identifier of the terminal on the basis of the electronic certificate received, then
- if the terminal is correctly authenticated, a rendezvous date is calculated and then transmitted to this terminal, and
- if the terminal is not correctly authenticated, no rendezvous date is calculated for this terminal.

6. Method according to Claim 5, wherein:
- during the first connection, only if the terminal is correctly authenticated, the method comprises:
• the generation (154) of a temporary electronic certificate comprising at least the calculated rendezvous date, an identifier of the terminal to which this rendezvous date has been allocated, and a digital signature of this calculated date and of this identifier of the terminal with a private key belonging to the transaction server, then
• the transmission (156) of this temporary electronic certificate to the terminal,
- during the second connection, the method comprises:
• the transmission (162) by the terminal of the received temporary electronic certificate to the rendezvous server or to the transaction server,
• the checking (166) of the authenticity of the temporary electronic certificate and the correspondence between the identifier of the terminal contained in this temporary electronic certificate and an identifier of the terminal that has transmitted this temporary electronic certificate, and
• if the authenticity of the temporary electronic certificate is incorrect, or if the identifier of the terminal that has transmitted this temporary electronic certificate does not correspond to the identifier contained in this temporary electronic certificate received, then the immediate execution of the processing required by this terminal is automatically disabled, and, in the contrary case, the immediate execution of the required processing is not automatically disabled.

7. Method according to Claim 6, wherein:
- during the first connection, the temporary electronic certificate that is generated further comprises a validity date calculated on the basis of the calculated rendezvous date, this validity date being later than the rendezvous date, and
- during the second connection, the method comprises the comparison (164) of the current date with the validity date of the temporary electronic certificate received and the automatic disabling of the immediate execution of the processing requested by this terminal if the current date is later than the validity date of the temporary electronic certificate, and in the contrary case the immediate execution of the requested processing is not automatically disabled.

8. Method of operation of a rendezvous server for the implementation of a method according to any of the preceding claims, wherein the rendezvous server:
- calculates (146) a rendezvous date on which the terminal must establish a second connection with the transaction server in order to transmit said request to it,
- constructs (158) a load plan for the transaction server based on the calculated rendezvous dates, this load plan associating with each possible date a predicted workload for this transaction server at this date,
**characterized in that**:
- the rendezvous server receives (136) the individual use profile of a terminal associating with each possible future date a state probability corresponding to the probability that this terminal will be in the active state on this date,
- the rendezvous server calculates (146) the rendezvous date by selecting a rendezvous date associated in the load plan for the transaction server with a predicted workload, which is below a first predetermined threshold while also being associated in the individual use profile of this terminal with a state probability corresponding to a probability that this terminal will be in the active state above a second predetermined threshold.

9. Operating method of a terminal for implementing a method according to any of Claims 1 to 7, wherein this terminal launches (162) the establishment of a second connection with the transaction server on the basis of the calculated rendezvous date so that the establishment of this second connection takes place only at the moment of, or after, the occurrence of this rendezvous date,
**characterized in that** the terminal:
- reads (100) instants of switching between:
• an active state of the terminal in which this terminal is capable of establishing the second connection with the transaction server, and
• an inactive state of the terminal in which this terminal is incapable of establishing this second connection with the transaction server,
- constructs (110), on the basis of the instants of switching read, an individual use profile associating with each possible future date a state probability corresponding to the probability that this terminal will be in the active state on this date,
- transmits (136) its constructed individual use profile to a rendezvous server and, in response, receives the rendezvous date calculated on the basis of its individual use profile.

10. Medium (66) for recording data comprising instructions for executing a method according to any of the preceding claims, when these instructions are executed by an electronic computer (62) of a terminal, this medium comprising for this purpose instructions for executing the following steps:
- after or during a first connection between the terminal and a rendezvous server, the calculation (146), by the terminal, of a rendezvous date on which the terminal must establish a second connection with the transaction server in order to transmit said request to it,
- the launch (162) of the establishment by this terminal of this second connection on the basis of the calculated rendezvous date so that the establishment of this second connection takes place only at the moment of, or after, the occurrence of this rendezvous date,
**characterized in that** the medium further comprises instructions for executing the following steps:
- reading (100) the instants of switching between:
• an active state of the terminal in which this terminal is capable of establishing the second connection with the transaction server, and
• an inactive state of the terminal in which this terminal is incapable of establishing this second connection with the transaction server,
- constructing (110), on the basis of the instants of switching read, an individual use profile associating with each possible future date a state probability corresponding to the probability that this terminal will be in the active state on this date,
- the calculation (146) of the rendezvous date consists in selecting a rendezvous date based on the load plan and the individual profile, that is to say selecting a rendezvous date associated in the load plan for the transaction server with a predicted workload, which is below a first predetermined threshold while also being associated in the individual use profile of this terminal with a state probability corresponding to a probability that this terminal will be in the active state above a second predetermined threshold,
- before the calculation of the rendezvous date, the terminal receives the load plan transmitted by a network head end so that the terminal can select the rendezvous date on the basis of both this load plan and its individual use profile, and the terminal then transmits the calculated rendezvous date to the transaction server so that the load plan can be updated on the basis of this new rendezvous date.

11. Data recording medium (66), **characterized in that** it comprises instructions for executing a method according to Claim 9, when these instructions are executed by an electronic computer (62) of a terminal.

12. Data recording medium (28), **characterized in that** it comprises instructions for executing a method according to Claim 8, when these instructions are executed by an electronic computer (38) of a rendezvous server.

13. Terminal comprising:
- a network card (54) for establishing a connection with a transaction server,
- a data recording medium (66),
- a programmable electronic computer (62) capable of executing instructions recorded on the data recording medium,
**characterized in that** the data recording medium (66) is in accordance with Claim 10 or 11.

14. Terminal according to Claim 13, wherein the terminal comprises:
- a descrambler (56) capable of descrambling a scrambled multimedia content with a control word, and
- a security processor (52) capable of decoding a cryptogram of the control word contained in an Entitlement Control Message (ECM).

15. Rendezvous server comprising:
- a data recording medium (28),
- a programmable electronic computer (38, 40) capable of executing instructions recorded on the data recording medium,
**characterized in that** the data recording medium (28) is in accordance with Claim 12.
